# EUROPÄISCHE PATENTSCHRIFT

(11) **EP 2 393 772 B1**
(45) Veröffentlichungstag und Bekanntmachung des Hinweises auf die Patenterteilung: **13.02.2013**
(21) Anmeldenummer: 09764802.6
(22) Anmeldetag: 03.12.2009
(51) Int. Cl.: C07C 211/36, C07C 211/38, C08G 59/40, C08G 59/50

(54) **HÄRTBARE ZUSAMMENSETZUNGEN AUF BASIS VON EPOXIDHARZEN UND HETERO-POLY-CYCLISCHEN POLYAMINEN**
CURABLE COMPOSITION BASED ON EPOXY RESINS AND HETERO-POLY-CYCLIC POLYAMINES
COMPOSITIONS DURCISSABLES À BASE DE RÉSINES ÉPOXY ET DE POLYAMINES HÉTÉRO-POLY-CYCLIQUES

(30) Priorität: 04.02.2009 DE 102009000610; 27.07.2009 DE 102009028019
(43) Veröffentlichungstag der Anmeldung: 14.12.2011
(73) Patentinhaber: Evonik Degussa GmbH, 45128 Essen (DE)
(72) Erfinder: ORTELT, Martina, 48249 Dülmen (DE); FUCHSMANN, Dirk, 45772 Marl (DE); HARTWIG, Benedikt, 64287 Darmstadt (DE)
(86) Internationale Anmeldenummer: PCT/EP2009/066276
(87) Internationale Veröffentlichungsnummer: WO 2010/088981

(56) Entgegenhaltungen:
- EP-A2- 0 822 212
- US-A- 3 873 637
- US-A- 3 945 953
- US-A- 4 829 134
- US-A1- 2004 147 640
- US-A1- 2008 009 599
- XIAODUN HE ET AL: "EVALUATION OF FURFURYLAMINES AS CURING AGENTS FOR EPOXY RESINS" JOURNAL OF POLYMER SCIENCE, POLYMER CHEMISTRY EDITION, INTERSCIENCE PUBLISHERS, NEW YORK, NY, US, Bd. 30, Nr. 4, 30. März 1992 (1992-03-30), Seiten 533-542, XP000258557 ISSN: 0360-6376

## Beschreibung

### Gebiet der Erfindung

Gegenstand der Erfindung sind härtbare Zusammensetzungen im Wesentlichen enthaltend A) mindestens ein Epoxidharz und B) mindestens einen Härter enthaltend ein hetero-poly-cyclisches Ringsystem enthaltend mindestens zwei Aminogruppen.

### Stand der Technik

Epoxidharze sind Prepolymere, welche pro Molekül zwei oder mehr Epoxidgruppen enthalten. Die Reaktion dieser Harze mit einer Reihe von Härtungsmitteln führt zu vernetzten Polymeren. Diese Polymere können duroplastisch sein; sie können Verwendung finden in den Bereichen z. B. Civil Engineering (Bauwesen), Composites (Faserverbundwerkstoffe), Vergussmassen, Lacke und Klebstoffe.
Ein Überblick über die Harze und Härter sowie deren Verwendung im Bereich Civil Engineering einschließlich ihrer Eigenschaften wird in H.Schuhmann, "Handbuch Betonschutz durch Beschichtungen", Expert Verlag 1992, Seite 396 - 428 gegeben. Der Einsatz der Harze und Härter für den Bereich Composites wird in P.K.Mallick, "Fiber-Reinforced Composites, Materials, Manufacturing, and Design", CRC Press, Seite 60 - 76 gegeben.

Es ist beispielsweise aus WO/1998/013407, WO/2001/009221 und WO/2005/123802 bekannt, dass zur Härtung von konventionellen Epoxidharzen, etwa solchen auf Basis von Bisphenol-A-diglycidylether oder Bisphenol-F-diglycidylether, neben zahlreichen anderen aminischen Härtern auch aliphatische bzw. cycloaliphatische Polyamine, z. B. Diethylentriamin (DETA) bzw. Isophoröndiamin (IPD), eingesetzt werden. Solche Amine haben unter anderem den Vorteil, dass die resultierenden duroplastischen Epoxidsysteme hervorragende mechanischen Eigenschaften (z. B. hohe Glasübergangstemperaturen) besitzen.

Konventionell werden Harze und Härter aus petrochemischen Quellen hergestellt; die US 2008/0009599 beschreibt härtbare Epoxy-Systeme basierend auf nachwachsenden Rohstoffquellen, bei denen die Epoxykomponente des Harzes aus Glycidylethern von pflanzlichen Anhydrozuckeralkoholen, besteht.
Nachteilig bei allen bekannten härtbaren Systemen ist in verschiedenen Anwendungen wie z. B. Composites jedoch eine oft zu hohe Reaktivität bzw. zu schnelle Aushärtung. Diese setzt die Verarbeitungs- und Topfzeiten stark herab. Außerdem kann einhergehende hohe Exothermie zu Schädigungen des Gesamtsystems in Form von z. B. Degradation der Matrix oder dem Auftreten von inneren Spannungen führen. Diese Nachteile zeigen sich zum Einen unter Verarbeitungsbedingungen der härtbaren Systeme wie sie z. B. bei der Fertigung von Rotorblättern für Windkraftanlagen nach dem Infusionsverfahren vorherrschen oder auch in verschlechterten Endeigenschaften nach Aushärtung, wie z. B. Verfärbungen.
Vor diesem Hintergrund besteht daher der gesteigerte Bedarf an neuen, härtbaren Systemen mit verringerter Reaktivität.

Aufgabe der Erfindung war es daher, härtbare Zusammensetzungen, die einerseits die aus dem Stand der Technik bekannten mechanischen Vorteile aufweisen, andererseits jedoch eine längere Verarbeitungszeit ermöglichen, bereitzustellen.

### Beschreibung der Erfindung

Überraschenderweise wurde gefunden, dass die im Folgenden beschriebenen härtbaren Systeme enthaltend ein Harz und einen polycyclische Polyamine enthaltenden Härter
verringerte Reaktivität bzw. verlängerte Verarbeitungszeiten bei gleichzeitig hervorragenden mechanischen Endeigenschaften der resultierenden Duroplaste aufweisen.

Gegenstand der vorliegenden Erfindung sind daher härtbare Zusammensetzungen im Wesentlichen enthaltend A) mindestens ein Epoxidharz und B) mindestens einen Härter enthaltend ein hetero-poly-cyclisches Ringsystem enthaltend mindestens zwei Aminogruppen, wobei als Komponente A Epoxidharze eingesetzt werden, die aus der Gruppe ausgewählt sind, die Epoxidharze auf Basis von Bisphenol A-diglycidylether, Epoxidharze auf Basis von Bisphenol F-diglycidylether und cycloaliphatische Typen umfasst,
und wobei als hetero-poly-cyclisches Ringsystem Polyamine von Dianhydrozuckern und deren Desoxy-Verbindungen eingesetz werden.

Ein weiterer Gegenstand der Erfindung ist die Verwendung erfindungsgemäßer härtbarer Systeme.

Weitere Vorteile sind die niedrige Viskosität formulierter Härter, die guten Oberflächeneigenschaften und hervorragenden Chemikalienbeständigkeiten ausgehärteter Systeme.

Der Begriff "hetero-poly-cyclisches Ringsystem" beschreibt im Zusammenhang mit der vorliegenden Erfindung ein Ringsystem enthaltend mindestens zwei Ringe, unabhängig davon, wie diese verknüpft sind (somit auch beispielsweise Phane, Catenane und Spiroverbindungen), wobei mindestens ein die Ringe bildendes Atom kein Kohlenstoffatom ist.
Der Begriff "Aminogruppe" beschreibt im Zusammenhang mit der vorliegenden Erfindung vorzugsweise primäre aber auch sekundäre Amine
Der Begriff "cycloaliphatische Verbindung" im Zusammenhang mit der vorliegenden Erfindung beschreibt zyklische Verbindungen, bei denen der Ring ausschließlich aus Kohlenstoffatomen aufgebaut ist, wie beispielsweise bei Cycloalkanen, -alkenen und - alkinen.
Alle angegebenen Prozent (%) sind wenn nicht anders angegeben Massenprozent.

Als Epoxidharzkomponente A) werden Epoxidharze eingesetzt, ausgewählt aus der Gruppe umfassend Epoxidharze auf Basis von Bisphenol A-diglycidylether, Epoxidharze auf Basis von Bisphenol F-diglycidylether und cycloaliphatische Typen wie z. B. 3,4-Epoxycyclohexyl-epoxyethan oder 3,4-Epoxycyclohexylmethyl-3,4-epoxy-cyclohexancarboxylat wobei Bisphenol A basierte Epoxidharze und Bisphenol F basierte Epoxidharze besonders bevorzugt sind. Erfindungsgemäß können auch Mischungen von Epoxidharzen als Komponente A) eingesetzt werden.

Als Härter in Komponente B) werden als hetero-poly-cyclische Ringsysteme Polyamine von Dianhydrozuckern und deren Desoxy-Verbindungen, bevorzugt von Dianhydrohexitol, eingesetzt.
Bevorzugt sind hier Diamino-dianhydro-dideoxy-hexitole, besonders bevorzugt 2,5-Diamino-1,4:3,6-Dianhydro-2,5-Dideoxy-D-Hexitol.
Von diesem sind bisher drei Stereoisomere der Formeln (I) bis (III) beschrieben, welche bevorzugt eingesetzt werden (z. B. Bashford, V. G. and Wiggins, L. F. (1950). Anhydrides of polyhydric alcohols. XIII. The amino derivatives of 1, 4:3, 6-dianhydromannitol, -sorbitol, and L-iditol and their behavior towards nitrous acid. Journal of the Chemical Society 1950 371-374.): 2,5-Diamino-1,4:3,6-Dianhydro-2,5-Dideoxy-D-Mannitol (I), 2,5-Diamino-1,4:3,6-Dianhydro-2,5-Dideoxy-D-Glucitol (II) und 2,5-Diamino-1,4:3,6-Dianhydro-2,5-Dideoxy-L-Iditol (III). Die drei Stereoisomere unterscheiden sich in der Chiralität an der Position 2 und 5. Die Aminogruppen können hier in der endo, endo (I), endo, exo (II) oder exo, exo (III) Position stehen, bezogen auf die Sesselform der annelierten fünfgliedrigen Ringe.

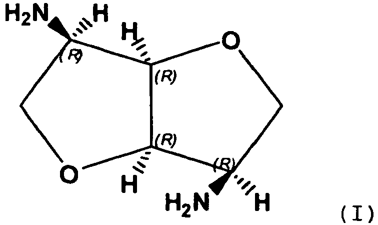

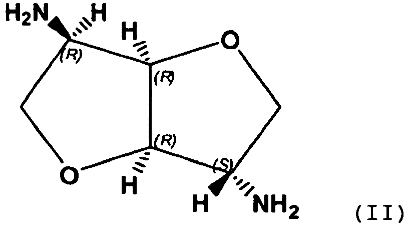

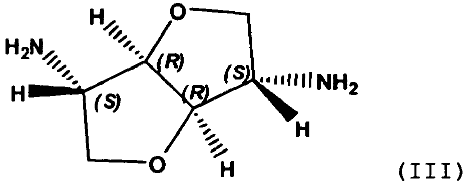

Besonders bevorzugt wird als Härter die Verbindung der Formel (II) eingesetzt, welche auch als Diaminoisosorbid (DAS) bezeichnet wird.
Efindungsgemäß können auch Mischungen von Hartem als Komponente B) eingesetzt werden.

Die härtbaren Zusammensetzungen können auch weitere Polyamine als Aminhärter, die mindestens zwei oder mehr primäre und/oder sekundäre Aminogruppen enthalten, aufweisen. Solche Polyamine sind z. B. Diethylentriamin, Triethylentetramin, Methylendianilin, Bis(aminocyclohexyl)methan, 3,3'-Dimethyl-4,4'-diaminodicyclohexylmethan, Tricyclododecandiamin, Norbomandiamin, N Aminoethylpiperazin, Isophorondiamin, m-Phenylenbis(methylamin), 1,3- und/oder 1,4-Bis(aminomethyl)cyclohexan, Trimethylhexamethylendiamin, Polyoxyalkylenamine, Polyaminoamide, Umsetzungsprodukte von Aminen mit Acrylnitril und Mannichbasen. Als weiteres Polyamin wird bevorzugt eingesetzt mindestens ein Polyamin ausgewählt aus der Gruppe enthaltend Isophorondiamin, Diethylentriamin, Trimethylhexamethylendiamin, m-Phenylenbis(methylamin), 1,3-Bis(aminomethyl)cyclohexan, Methylen-bis(4-aminocyclohexan), 3,3'-Dimethyl-4,4'-diaminodicyclohexyl-methan,
N-Aminoethylpiperazin, Polyoxyalkylenamine, Polyaminoamide, Umsetzungsprodukte von Aminen mit Acrylnitril und Mannichbasen, wobei Isophorondiamin, Polyoxyalkylenamine, Bis(aminocyclohexyl)methan, 3,3'-Dimethyl-4,4'-diaminodicyclohexyl-methan, N-Aminoethylpiperazin, m-Phenylenbis(methylamin) und Diethylentriamin besonders bevorzugt sind.
Diese werden in Mengen von 0,5 bis 95 Gew.-%, bevorzugt in Mengen von 10 bis 90 Gew.-%, und besonders bevorzugt in Mengen von 20 bis 60 Gew.-%, bezogen auf alle eingesetzten Amine, eingesetzt.

Komponente A) und Komponente B) plus gegebenenfalls weitere Amine werden im Allgemeinen im stöchiometrischen Verhältnis gehärtet. Abweichungen davon sind jedoch in gewissem Rahmen in Abhängigkeit vom Härtertyp und der Anwendung möglich.
Harze und Härter werden dabei bevorzugt in äquivalenten Mengen eingesetzt. Es sind jedoch auch Abweichungen vom stöchiometrischen Verhältnis möglich.

Je nach entsprechendem Einsatzgebiet enthalten Epoxidharzformulierungen außer einem ein oder mehrere Epoxidgruppen haltigen Harz und einem oder mehreren Härtern Modifizierungsmittel, Reaktionsbeschleuniger, Reaktiwerdünner, Lösemittel und/oder Additive wie u. a. Entschäumer, Füllstoffe und/oder Pigmente.
Bei Faserverbundwerkstoffen enthalten die Formulierungen zusätzlich z. B. die entsprechenden Fasern und/oder Vliese.

Als Modifizierungsmittel eignen sich besonders Verbindungen wie z. B. Benzylalkohol, Alkylphenole oder Kohlenwasserstoffharze, insbesondere Benzylalkohol.
Zu den Reaktionsbeschleunigem gehören z. B. organische Säuren wie Milchsäure und Salicylsäure, oder Verbindungen tertiärer Amine wie z. B.
Tris(dimethylaminomethyl)phenol und Benzyldimethylamin.

Geeignete Reaktivverdünner sind z. B. mono- oder polyfunktionelle, flüssige Epoxidverbindungen wie z. B. 2-Ethylhexylglycidylether, Hexandioldiglycidylether und Trimethylolpropantriglycidylether.

Zu den einsetzbaren Lösemitteln gehören z. B. aromatische Kohlenwasserstoffe wie Xylol, oder Alkohole wie Ethanol, Propanole oder Butanole.

Weiterhin werden die für Beschichtungen typischen Pigmente wie z. B. Titandioxid, Eisenoxidpigmente und Ruße und Füllstoffe wie z. B. Talkum, Schwerspat und Bentonen sowie Additive wie u. a. Entschäumer und Verlaufsmittel eingesetzt.

Je nach Verwendungszweck werden solche Systeme bei unterschiedlichen Temperaturen gehärtet. So härtet man z. B. bei den Anwendungen im Bereich Bauchemie und Korrosionsschutz meist bei Umgebungstemperatur, während z. B. bei Faserverbundwerkstoffen bei erhöhter Temperatur (der sogenannten "Heißhärtung") gehärtet wird.
Gegenstand der Erfindung ist somit auch die Verwendung der erfindungsgemäßen härtbaren Zusammensetzungen, wobei die härtbaren Zusammensetzungen bei Umgebungstemperatur gehärtet werden, bevorzugt bei 10 bis 35 °C, besonders bevorzugt bei 15 bis 30 °C.
Da sich erfindungsgemäße, härtbare Zusammensetzungen auch bei erhöhten Temperaturen durch eine homogene Aushärtung auszeichnen, ist ein Gegenstand der Erfindung auch die Verwendung von härtbaren Zusammensetzungen, wobei die härtbaren Zusammensetzungen bevorzugt heißgehärtet werden, bei 40 bis 180 °C, bevorzugt bei 40 bis 180 °C, besonders bevorzugt bei 50 bis 130 °C.

Die härtbaren Zusammensetzungen werden verwendet für Beschichtungen, insbesondere für Beschichtungen auf Metall, mineralischen Untergründen und Kunststoffen sowie für Fußbodenbeschichtungen, Lacke, Polymerbeton, Reparatursysteme, Ankermassen, Klebstoffe, Vergussmassen und Imprägnierungen und insbesondere für Faserverbundwerkstoffe.
Die Verwendung erfindungsgemäßer härtbarer Zusammensetzung als Klebstoff umfasst insbesondere die Verwendung in Klebstoffzusammensetzungen für Metall, Kunststoff, Holz, Glas, MDF und Leder.

Ein weiterer Gegenstand der Erfindung ist die Verwendung der erfindungsgemäßen härtbaren Zusammensetzung in Beschichtungs-, Reparatur-, Klebe-, Verguss- und Imprägnierverfahren, insbesondere im Bereich Civil Engineering. Die typischen Verarbeitungsverfahren sind beispielsweise dem Lehrbuch der Lacke und Beschichtungen, Band 7, H. Kittel, 2. Auflage, 2005 und H. Schuhmann, "Handbuch Betonschutz durch Beschichtungen", Expert Verlag 1992, zu entnehmen, wie z. B. Verfahren für selbstverlaufende Fußbodensysteme, Rissinjektionsverfahren.
Ebenso ist ein weiterer Gegenstand der Erfindung die Verwendung der erfindungsgemäßen härtbaren Zusammensetzung zur Herstellung von Gegenständen, insbesondere von Faserverbundwerkstoffen, durch Verfahren ausgewählt aus der Gruppe umfassend Infusionsverfahren, Injektionsverfahren, insbesondere Vakuum-Injektions-/Infusions-Verfahren, Prepregverfahren, Resin-Transfer-Molding-Verfahren (RTM), Vacuum-Assistet-Resin-Transfer-Molding-Verfahren (VARTM), Structural-Reaction-Injection-Molding-Verfahen (SRIM), Filament-Winding-Verfahren, Bag-Molding-Verfahren Pultrusionsverfahren und Hand-Layup-Verfahren, wobei das Prepregverfahren besonders bevorzugt ist. Unterschiedliche Ausführungen der genannten Verarbeitungsverfahren zur Herstellung von Gegenständen sind dem Fachmann bekannt und finden sich unter anderem in "Composites Technologien", Skript zur ETH-Vorlesung 151-0307-00L, Version 4.0, Paolo Ermanni, Zürich, August 2007 und in P.K.Mallick, "Fiber-Reinforced Composites, Materials, Manufacturing, and Design", CRC Press.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1; Ergebnisse in Systemen für Civil Engineering:

Erfindungsgemäße härtbare Zusammensetzung 1 (hZ1) die nicht erfindungsgemäßen Vergleichszusammensetzung 1 (VZ1) wurden hergestellt und nach unten genannter Aushärtung auf verschiedene Eigenschaften hin untersucht.
Zur Herstellung der Härterkomponenten wurden dabei Amin und Benzylalkohol zuerst bei Raumtemperatur (20 - 25 °C) gemischt und danach portionsweise das Epoxidharz zugefügt.
Die Viskosität wurde gemessen nach DIN 53019.
Die Peaktemperatur wurde mittels Temperaturfühler isotherm an einer 200 g-Probe bestimmt.
Die Gelzeit wurde an derselben 200 g-Probe durch Ermittlung der Fließfähigkeit bestimmt.
Die Glasübergangstemperatur (Tg) wurde mit Differential Scanning Calorimetry ermittelt, die Shorehärte nach DIN 53505.

Die folgende Tabelle zeigt die Ergebnisse der Messungen.

| | VZ1 | hZ1 |
|---|---|---|
| **Härterkomponente** | | |
| Isophorondiamin | 100 g | - |
| DAS | - | 100 g |
| Benzylalkohol | 88 g | 88 g |
| EPON Resin 828 | 20g | 20 g |

| **Harzkomponente** | | |
|---|---|---|
| EPON Resin 828 | 421 g | 502 g |

| **Eigenschaften** | | |
|---|---|---|
| Ausgangsviskosität | 2200 mPa*s | 2000 mPa*s |
| Viskositäts-Verdoppelung nach | 20 min | 70 min |
| Peak-Temperatur | 116 °C | Kein Temperaturanstieg |
| Gelzeit | 50 min | 6,5 Stunden |

| **Eigenschaften nach Härtung 23 °C /50 % rel. Luftfeuchte** | | |
|---|---|---|
| Tg | 49°C | 44 °C |
| Shore Härte | 82 | 81 |
| Umsatz (DSC) | 94% | 94% |
| Oberflächeneigenschaften (visuell) | Sehr gut | Sehr gut |

| **Chemische Beständigkeiten nach Härtung 23 °C /50 % rel. Luftfeuchte, Gewichtszunahme nach Lagerung 28 Tage** | | |
|---|---|---|
| Ethanol | 9 % | 5 % |
| Xylol | 1 % | 0 |
| 10%ige Essigsäure | 7 % | 3 % |
| 30%ige Essigsäure | 35 % | 23 % |

DAS ist gut geeignet als aminische Härterkomponente für Epoxidharze im Bereich Civil Engineering. Erhalten wurden Formulierungen mit langer Verarbeitungszeit, guten Oberflächen, guten mechanischen Eigenschaften und guten chemischen Beständigkeiten.

### Beispiel 2; Ergebnisse in Systemen für Composite-Anwendungen:

Erfindungsgemäße härtbare Zusammensetzung 2 (hZ2) die nicht erfindungsgemäßen Vergleichszusämmensetzung 2 (VZ2) wurden wie oben beschrieben hergestellt und nach unten genannter Aushärtung auf verschiedene Eigenschaften, gegebenenfalls wie in Beispiel 1 beschrieben, hin untersucht.
Die Wärmeformbeständigkeit wurde gemessen in Anlehnung an DIN EN ISO 75.
Der Umsatz wurde mittels Differential Scanning Calorimetry gemessen.

Die folgende Tabelle zeigt die Ergebnisse der Messungen.

| | VZ2 | hZ2 |
|---|---|---|
| **Härterkomponente** | | |
| Isophorondiamin | 30 g | - |
| DAS | - | 30 g |
| Polyetheramin D230 | 70 g | 70 g |

| **Harzkomponente** | | |
|---|---|---|
| EPON Resin 828 | 309 g | 330 g |
| 1,6-Hexandioldiglycidylether | 34 g | 37 g |

| **Eigenschaften** | | |
|---|---|---|
| Ausgangsviskosität | 600 mPa*s | 680 mPa*s |
| Viskositätsverdoppelung nach | 125 min | 195 min |
| | | |

| **Eigenschaften nach Härtung** **24 Stunden bei 23 °C + 16 Stunden bei 50 °**C | | |
|---|---|---|
| Tg | 66°C | 71 °C |
| Wärmeformbeständigkeit | 70°C | 79 °C |
| Umsatz (DSC) | 93% | 91 % |

| **Prüfungen nach DIN EN ISO 527-2 (Probekörper 1B)** | | |
|---|---|---|
| Zugfestigkeit | 69 Mpa | 88 MPa |
| Bruchdehnung | 5,8% | 5,2% |
| Zug-E-Modul | 3290 Mpa | 3520 MPa |

| **Prüfungen nach DIN EN ISO 178** | | |
|---|---|---|
| Biegefestigkeit | 109 Mpa | 128 Mpa |
| Biege-E-Modul | 2950 Mpa | 3570 MPa |

DAS ist aufgrund seiner geringen Reaktivität und hervorragenden mechanischen Eigenschaften für Composites sehr gut geeignet.

## Patentansprüche

1. Härtbare Zusammensetzungen im Wesentlichen enthaltend
A) mindestens ein Epoxidharz
und
B) mindestens einen Härter enthaltend ein hetero-poly-cyclisches Ringsystem enthaltend mindestens zwei Aminogruppen,
wobei als Komponente A Epoxidharze eingesetzt werden, die aus der Gruppe ausgewählt sind, die Epoxidharze auf Basis von Bisphenol A-diglycidylether, Epoxidharze auf Basis von Bisphenol F-diglycidylether und cycloaliphatische Typen umfasst,
und wobei als hetero-poly-cyclisches Ringsystem Polyamine von Dianhydrozuckern und deren Desoxy-Verbindungen eingesetzt werden

2. Härtbare Zusammensetzungen nach Anspruch 1,
**dadurch gekennzeichnet,**
**dass** als hetero-poly-cyclisches Ringsystem 2,5-Diamino-1,4:3,6-Dianhydro-2,5-Dideoxy-D-Hexitol eingesetzt wird.

3. Härtbare Zusammensetzungen nach mindestens einem der vorhergehenden Ansprüche,
**dadurch gekennzeichnet,**
**dass** 2,5-Diamino-1,4:3,6-Dianhydro-2,5-Dideoxy-D-Mannitol (I), 2,5-Diamino-1,4:3,6-Dianhydro-2,5-Dideoxy-D-Glucitol (II) und 2,5-Diamino-1,4:3,6-Dianhydro-2,5-Dideoxy-L-Iditol (III) der Formeln 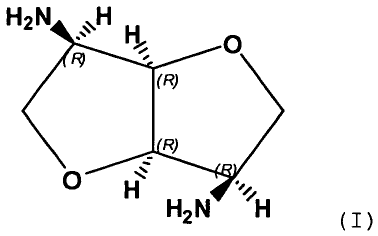 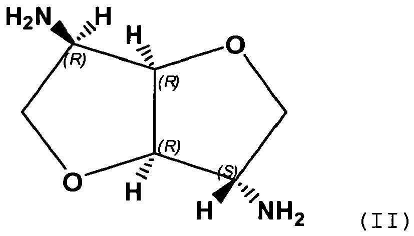 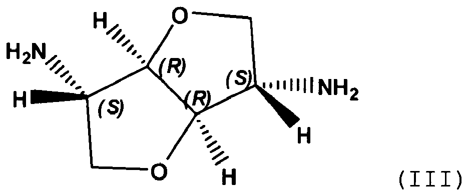 allein oder in Mischungen, eingesetzt werden.

4. Härtbare Zusammensetzungen nach mindestens einem der vorhergehenden Ansprüche,
**dadurch gekennzeichnet,**
**dass** Modifizierungsmittel enthalten sind.

5. Härtbare Zusammensetzungen nach Anspruch 4,
**dadurch gekennzeichnet,**
**dass** als Modifizierungsmittel mindestens eines ausgewählt aus der Gruppe enthaltend Benzylalkohol, Alkylphenole und Kohlenwasserstoffharze enthalten sind.

6. Härtbare Zusammensetzungen nach mindestens einem der vorherigen Ansprüche,
**dadurch gekennzeichnet,**
**dass** Reaktionsbeschleuniger enthalten sind.

7. Härtbare Zusammensetzungen nach Anspruch 6,
**dadurch gekennzeichnet,**
**dass** als Reaktionsbeschleuniger Milchsäure und/oder Salicylsäure enthalten sind.

8. Härtbare Zusammensetzungen nach Anspruch 7,
**dadurch gekennzeichnet,**
**dass** als Reaktionsbeschleuniger tertiäre Amine enthalten sind.

9. Härtbare Zusammensetzungen nach mindestens einem der vorhergehenden Ansprüche,
**dadurch gekennzeichnet,**
**dass** Reaktivverdünner enthalten sind.

10. Härtbare Zusammensetzungen nach Anspruch 9,
**dadurch gekennzeichnet,**
**dass** als Reaktivverdünner mono- oder polyfunktionelle, Epoxidverbindungen enthalten sind.

11. Härtbare Zusammensetzungen nach mindestens einem der vorhergehenden Ansprüche,
**dadurch gekennzeichnet,**
**dass** Lösemittel enthalten sind.

12. Härtbare Zusammensetzungen nach mindestens einem der vorhergehenden Ansprüche,
**dadurch gekennzeichnet,**
**dass** zusätzlich Pigmente und/oder Füllstoffe enthalten sind.

13. Härtbare Zusammensetzungen nach mindestens einem der vorhergehenden Ansprüche,
**dadurch gekennzeichnet,**
**dass** zusätzlich Additive enthalten sind.

14. Härtbare Zusammensetzungen nach mindestens einem der vorhergehenden Ansprüche,
**dadurch gekennzeichnet,**
**dass** weitere Polyamine enthalten sind.

15. Härtbare Zusammensetzungen nach Anspruch 14,
**dadurch gekennzeichnet,**
**dass** als weiteres Polyamin ein Polyamin ausgewählt aus der Gruppe enthaltend Isophorondiamin, Diethylentriamin, Trimethylhexamethylendiamin, m-Phenylenbis(methylamin), 1,3-Bis(aminomethyl)cyclohexan, Methylen-bis(4-aminocyclohexan), 3,3'-Dimethyl-4,4'-diaminodicyclohexyl-methan, N-Aminoethylpiperazin, Polyoxyalkylenamine, Polyaminoamide, Umsetzungsprodukte von Aminen mit Acrylnitril und Mannichbasen eingesetzt wird.

16. Härtbare Zusammensetzungen nach Anspruch 14 oder 15, **dadurch gekennzeichnet,**
**dass** weitere Polyamine in Mengen von 0,5 bis 95 Gew.-% bezogen auf alle eingesetzten Amine, enthalten sind.

17. Verwendung von härtbaren Zusammensetzungen nach mindestens einem der Ansprüche 1 bis 16, wobei die härtbaren Zusammensetzungen bei Umgebungstemperatur gehärtet werden,

18. Verwendung nach Anspruch 17, wobei die Härtungstemperatur bei 10 bis 35°C liegt.

19. Verwendung von härtbaren Zusammensetzungen nach mindestens einem der Ansprüche 1 bis 18, wobei die härtbaren Zusammensetzungen heißgehärtet werden.

20. Verwendung nach Anspruch 19, wobei die Härtungstemperatur bei 40 bis 180 °C liegt.

21. Verwendung von härtbaren Zusammensetzungen nach mindestens einem der Ansprüche 1 bis 20 in Beschichtungen.

22. Verwendung nach Anspruch 21 für Beschichtungen auf Metall, mineralischen Untergründen und Kunststoffen.

23. Verwendung von härtbaren Zusammensetzungen nach mindestens einem der Ansprüche 1 bis 16 für Fußbodenbeschichtungen, Lacke, Polymerbeton, Reparatursysteme, Ankermassen, Klebstoffe, Vergussmassen und Imprägnierungen.

24. Verwendung von härtbaren Zusammensetzungen nach mindestens einem der Ansprüche 1 bis 16 für Faserverbundwerkstoffe.

25. Verwendung von härtbaren Zusammensetzungen nach mindestens einem der Ansprüche 1 bis 16 in Beschichtungs-, Reparatur-, Klebe-, Verguss- und Imprägnierverfahren.

26. Verwendung von härtbaren Zusammensetzungen nach mindestens einem der Ansprüche 1 bis 16 zur Herstellung von Gegenständen, insbesondere von Faserverbundwerkstoffen, durch Verfahren ausgewählt aus der Gruppe umfassend Infusionsverfahren, Injektionsverfahren, Prepregverfahren, Resin-Transfer-Molding-Verfahren (RTM), Vacuum-Assistet-Resin-Transfer-Molding-Verfahren (VARTM), Structural-Reaction-Injection-Molding-Verfahen (SRIM), Filament-Winding-Verfahren, Bag-Molding-Verfahren Pultrusionsverfahren und Hand-Layup-Verfahren.

## Claims

1. Curable compositions consisting essentially of
A) at least one epoxy resin
and
B) at least one hardener comprising a heteropolycyclic ring system comprising at least two amino groups,
where component A used comprises epoxy resins selected from the group consisting of epoxy resins based on bisphenol A diglycidyl ether, epoxy resins based on bisphenol F diglycidyl ether, and cycloaliphatic types,
and where the heteropolycyclic ring system used comprises polyamines derived from dianhydrosugars and desoxy compounds thereof.

2. Curable compositions according to Claim 1,
**characterized in that**
the heteropolycyclic ring system used comprises 2,5-diamino-1,4:3,6-dianhydro-2,5-dideoxy-D-hexitol.

3. Curable compositions according to at least one of the preceding claims,
**characterized in that**
the following are used, alone or in mixtures: 2,5-diamino-1,4:3,6-dianhydro-2,5-dideoxy-D-mannitol (I), 2,5-diamino-1,4:3,6-dianhydro-2,5-dideoxy-D-glucitol (II), and 2,5-diamino-1,4:3,6-dianhydro-2,5-dideoxy-L-iditol (III) of the formulae

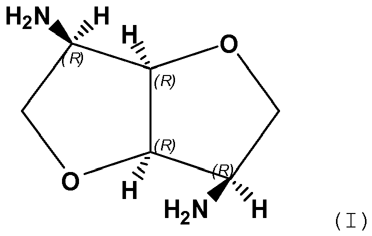

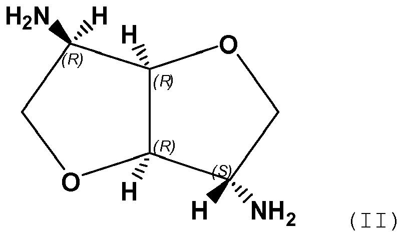

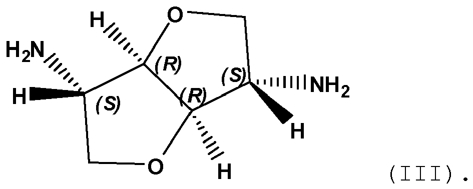

4. Curable compositions according to at least one of the preceding claims,
**characterized in that**
modifiers are present.

5. Curable compositions according to Claim 4,
**characterized in that**
modifiers present comprise at least one selected from the group consisting of benzyl alcohol, alkylphenols, and hydrocarbon resins.

6. Curable compositions according to at least one of the preceding claims,
**characterized in that**
reaction accelerators are present.

7. Curable compositions according to Claim 6,
**characterized in that**
reaction accelerators present comprise lactic acid and/or salicylic acid.

8. Curable compositions according to Claim 6,
**characterized in that**
reaction accelerators present comprise tertiary amines.

9. Curable compositions according to at least one of the preceding claims,
**characterized in that**
reactive diluents are present.

10. Curable compositions according to Claim 9,
**characterized in that**
reactive diluents present comprise mono- or polyfunctional epoxy compounds.

11. Curable compositions according to at least one of the preceding claims,
**characterized in that**
solvents are present.

12. Curable compositions according to at least one of the preceding claims,
**characterized in that**
pigments and/or fillers are also present.

13. Curable compositions according to at least one of the preceding claims,
**characterized in that**
additives are also present.

14. Curable compositions according to at least one of the preceding claims,
**characterized in that**
further polyamines are present.

15. Curable compositions according to Claim 14,
**characterized in that**
the further polyamine used comprises a polyamine selected from the group consisting of isophoronediamine, diethylenetriamine, trimethylhexamethylenediamine, m-phenylenebis(methylamine), 1,3-bis(aminomethyl)cyclohexane, methylenebis(4-aminocyclohexane), 3,3'-dimethyl-4,4'-diaminodicyclohexylmethane, N-aminoethylpiperazine, polyoxyalkyleneamines, polyaminoamides and reaction products of amines with acrylonitrile and Mannich bases.

16. Curable compositions according to Claim 14 or 15,
**characterized in that**
amounts present of further polyamines are from 0.5 to 95% by weight, based on all of the amines used.

17. Use of curable compositions according to at least one of Claims 1 to 16, where the curable compositions are cured at ambient temperature.

18. Use according to Claim 17, where the curing temperature is from 10 to 35°C.

19. Use of curable compositions according to at least one of Claims 1 to 18, where the curable compositions are hot-cured.

20. Use according to Claim 19, where the curing temperature is from 40 to 180°C.

21. Use of curable compositions according to at least one of Claims 1 to 20 in coatings.

22. Use according to Claim 21 for coatings on metal, on mineral substrates, and on plastics.

23. Use of curable compositions according to at least one of Claims 1 to 16 for floorcovering coatings, other coatings, polymer concrete, repair systems, anchoring compositions, adhesives, potting compositions, and impregnation systems.

24. Use of curable compositions according to at least one of Claims 1 to 16 for fiber-composite materials.

25. Use of curable compositions according to at least one of Claims 1 to 16 in coating processes, repair processes, adhesive processes, potting processes, and impregnation processes.

26. Use of curable compositions according to at least one of Claims 1 to 16 for producing articles, in particular fiber-composite materials, by processes selected from the group consisting of infusion processes, injection processes, prepreg processes, resin-transfer-molding processes (RTM), vacuum-assisted-resin-transfer-molding processes (VARTM), structural-reaction-injection-molding processes (SRIM), filament-winding processes, bag-molding processes, pultrusion processes, and hand-layup processes.

## Revendications

1. Compositions durcissables, contenant essentiellement
A) au moins une résine époxyde et
B) au moins un durcisseur contenant un système cyclique hétéropolycyclique contenant au moins deux groupes amino,
en utilisant comme composant A des résines époxydes qui sont choisies dans le groupe comprenant les résines époxydes à base de bisphénol A-diglycidyléther, les résines époxydes à base de bisphénol F-diglycidyléther et les types cycloaliphatiques,
et en utilisant comme système hétéropolycyclique des polyamines de sucres dianhydro et leurs composés désoxy.

2. Compositions durcissables selon la revendication 1, **caractérisées en ce qu'**on utilise comme système cyclique hétéropolycyclique le 2,5-diamino-1,4:3,6-dianhydro-2,5-didésoxy-D-hexitol.

3. Compositions durcissables selon au moins l'une quelconque des revendications précédentes, **caractérisées en ce qu'**on utilise du 2,5-diamino-1,4:3,6-dianhydro-2,5-didésoxy-D-mannitol (I), du 2,5-diamino-1,4:3,6-dianhydro-2,5-didésoxy-D-glucitol (II) et du 2,5-diamino-1,4:3,6-dianhydro-2,5-didésoxy-L-iditol (III) des formules 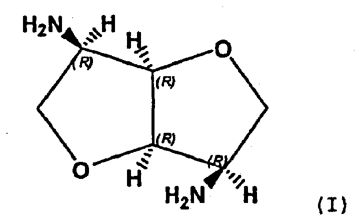 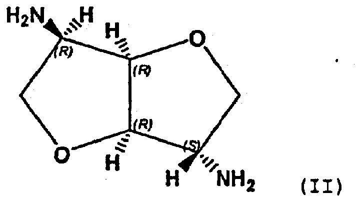 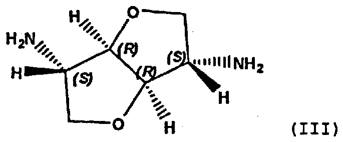 seuls ou en mélanges.

4. Compositions durcissables selon au moins l'une quelconque des revendications précédentes, **caractérisées en ce qu'**elles contiennent des agents de modification.

5. Compositions durcissables selon la revendication 4, **caractérisées en ce qu'**elles contiennent comme agent de modification au moins un agent choisi dans le groupe contenant l'alcool benzylique, les alkylphénols et les résines hydrocarbonées.

6. Compositions durcissables selon au moins l'une quelconque des revendications précédentes, **caractérisées en ce qu'**elles contiennent des accélérateurs de réaction.

7. Compositions durcissables selon la revendication 6, **caractérisées en ce qu'**elles contiennent de l'acide lactique et/ou de l'acide salicylique comme accélérateurs de réaction.

8. Compositions durcissables selon la revendication 7, **caractérisées en ce qu'**elles contiennent des amines tertiaires comme accélérateurs de réaction.

9. Compositions durcissables selon au moins l'une quelconque des revendications précédentes, **caractérisées en ce qu'**elles contiennent des diluants réactifs.

10. Compositions durcissables selon la revendication 9, **caractérisées en ce qu'**elles contiennent des composés époxydes monofonctionnels ou polyfonctionnels comme diluants réactifs.

11. Compositions durcissables selon au moins l'une quelconque des revendications précédentes, **caractérisées en ce qu'**elles contiennent des solvants.

12. Compositions durcissables selon au moins l'une quelconque des revendications précédentes, **caractérisées en ce qu'**elles contiennent en outre des pigments et/ou des charges.

13. Compositions durcissables selon au moins l'une quelconque des revendications précédentes, **caractérisées en ce qu'**elles contiennent en outre des additifs.

14. Compositions durcissables selon au moins l'une quelconque des revendications précédentes, **caractérisées en ce qu'**elles contiennent d'autres polyamines.

15. Compositions durcissables selon la revendication 14, **caractérisées en ce qu'**on utilise comme autre polyamine une polyamine choisie dans le groupe contenant l'isophoronediamine, la diéthylènetriamine, la triméthylhexaméthylènediamine, la m-phénylènebis(méthylamine), le 1,3-bis(aminométhyl)cyclohexane, le méthylènebis(4-aminocyclohexane), le 3,3'-diméthyl-4,4'-diaminodicyclohexylméthane, la N-aminoéthylpipérazine, les polyoxyalkylène-amines, les polyaminoamides, les produits de transformation d'amines avec de l'acrylonitrile et des bases de Mannich.

16. Compositions durcissables selon la revendication 14 ou 15, **caractérisées en ce que** d'autres polyamines sont contenues en des quantités de 0,5 à 95% en poids par rapport à toutes les amines utilisées.

17. Utilisation de compositions durcissables selon au moins l'une quelconque des revendications 1 à 16, les compositions durcissables étant durcies à température ambiante.

18. Utilisation selon la revendication 17, la température de durcissement étant située à 10 jusqu'à 35°C.

19. Utilisation de compositions durcissables selon au moins l'une quelconque des revendications 1 à 18, les compositions durcissables étant durcies à chaud.

20. Utilisation selon la revendication 19, la température de durcissement étant située à 40 jusqu'à 180°C.

21. Utilisation de compositions durcissables selon au moins l'une quelconque des revendications 1 à 20 dans des revêtements.

22. Utilisation selon la revendication 21 pour des revêtements sur du métal, des substrats minéraux et des matériaux synthétiques.

23. Utilisation de compositions durcissables selon au moins l'une quelconque des revendications 1 à 16 pour des revêtements de sol, des laques, du béton polymère, des systèmes de réparation, des masses d'ancrage, des adhésifs, des masses de coulage et des imprégnations.

24. Utilisation de compositions durcissables selon au moins l'une quelconque des revendications 1 à 16 pour des matériaux composites à base de fibres.

25. Utilisation de compositions durcissables selon au moins l'une quelconque des revendications 1 à 16 dans des procédés de revêtement, de réparation, adhésifs, de coulage et d'imprégnation.

26. Utilisation de compositions durcissables selon au moins l'une quelconque des revendications 1 à 16 pour la réalisation d'objets, en particulier de matériaux composites à base de fibres, par des procédés choisis dans le groupe comprenant les procédés d'infusion, d'injection, de préimprégné (prepreg), de moulage par transfert de résine (Resin-Transfer-Molding - RTM), de moulage par transfert de résine assisté par le vide (Vacuum-Assisted-Resin-Transfer-Molding - VARTM), de moulage par injection et réaction structurelle (Structural-Reaction-Injection-Molding - SRIM), d'enroulement de filaments (Filament-Winding), de moulage en sac (Bag-Molding), par pultrusion et moulage au contact manuel (Hand-Layup).
